# EUROPÄISCHE PATENTANMELDUNG

(11) **EP 1 437 257 A2**
(43) Veröffentlichungstag der Anmeldung: **14.07.2004**
(21) Anmeldenummer: 03405907.1
(22) Anmeldetag: 19.12.2003
(51) Int. Cl.: B60M 1/36

(54) **Kurzschlussvorrichting für das Schienennetz einer elektrischen Bahn mit einer Stromschiene zur Speisung des elektrischen Antriebs**

(30) Priorität: 13.01.2003 CH 452003
(71) Anmelder: Alcan Technology & Management Ltd., 8212 Neuhausen am Rheinfall (CH)
(72) Erfinder: Netzel, Timo, 06844 Dessau (DE); Bittlingmayer, Gerd, 12163 Berlin (DE)

(57) **Zusammenfassung**

Die Erfindung betrifft eine Kurzschlussvorrichtung (1) für das Schienennetz einer elektrischen Bahn, welches eine Stromschiene zur Speisung des elektrischen Antriebs der Bahn enthält, zur Herstellung einer Kurzschlussverbindung zwischen einer Fahrschiene und der Stromschiene, wobei die Kurzschlussvorrichtung (1) ein, eine Kontaktfläche (16) zur Fahrschiene ausbildendes erstes Kontaktelement (3) und einen mit dem Kontaktelement (3) über eine Gelenkverbindung (4) gekoppelten, eine Kontaktfläche (7) zur Stromschiene ausbildenden Kontaktarm (2) enthält. Die Erfindung zeichnet sich dadurch aus, dass die Gelenkverbindung eine Mehrfachgelenkverbindung (4) ist, enthaltend zwei über ein Kniegelenk (10) miteinander und über jeweils ein erstes und zweites Verbindungsgelenk (9, 11) mit dem Kontaktelement (3) und dem Kontaktarm (2) verbundene Hebel (8, 17), wobei einer der Hebel als Schliesshebel (8) ausgebildet ist, und die Ausbildung und Anordnung der Hebel (8, 17) und Gelenkverbindungen (9, 10, 11) dergestalt ist, dass durch Ausüben einer Drehbewegung des Schliesshebels (8) und mit ihm des Kniegelenks (10) um die Achse des dem Schliesshebels (8) zugeordneten Verbindungsgelenks (11) das Kontaktelement (3) und der Kontaktarm (2) unter Ausbildung eines elektrischen Kontaktes zusammengeführt werden können.

## Beschreibung

Die Erfindung betrifft eine Kurzschlussvorrichtung für das Schienennetz einer elektrischen Bahn, welches eine Stromschiene zur Speisung des elektrischen Antriebs der Bahn enthält, zur Herstellung einer Kurzschlussverbindung zwischen einer Fahrschiene und der Stromschiene, wobei die Kurzschlussvorrichtung ein, eine Kontaktfläche zur Fahrschiene ausbildendes erstes Kontaktelement und einen mit dem Kontaktelement über eine Gelenkverbindung gekoppelten, eine Kontaktfläche zur Stromschiene ausbildenden Kontaktarm enthält.

Im Gegensatz zu überregionalen Bahnnetzen, bei welchen die Stromabnahme der Schienenfahrzeuge über Oberleitungen erfolgt, geschieht die Stromabnahme bei Untergrundbahnen (U- Bahn) oder S-Bahnen in der Regel über eine Stromschiene. Eine solche Stromschiene kann beispielsweise als Seitenführungsschiene ausgebildet sein. Die Stromschiene kann dabei so angeordnet sein, dass der Stromabnehmer die Stromschiene von unten, seitlich oder von oben bestreicht.

Bei der Durchführung von Arbeiten am Schienennetz von Bahnen mit oben genannten Stromschienen wird als Sicherheitsmassnahme nicht nur die Stromzufuhr zur Stromschiene abgeschaltet sondern auch eine Sicherheitsvorrichtung installiert, die als Kurzschlussvorrichtung bezeichnet wird, und welche die den Pluspol bildende Stromschiene mit der den Minuspol bildenden Schiene kurzschliesst, die im allgemeinen von einer der Gleisschienen gebildet ist. Ein Kurzschliesser, auch Erdungskurzschliesser genannt, stellt auf diese Weise eine elektrisch leitende Verbindung her, um im Fehlerfall den Strom abzuleiten und somit Leben zu schützen.

Die genannte Kurzschliessvorrichtung wird hierzu jeweils vor und hinter der Arbeitsstelle angebracht, um die Arbeitsstelle zu sichern und eine Kurzschlussstromeinspeisung allseitig zu verhindern.

Eine derzeit verwendete Kurzschlussvorrichtung wird aus zwei über eine Gelenkverbindung miteinander gekoppelten Arme gebildet, wobei ein erster Arm einen in Einsatzposition in horizontaler Lage geführten Kontaktarm mit einem der Stromschiene anliegenden Kontaktfinger ausbildet, und ein zweiter Arm einen in Einsatzposition vertikal ausgerichteter Basisarm mit einem auf der Fahrschiene aufliegenden Kontaktfuss ausbildet. Der Kontaktarm wird in Einsatzposition über eine an den Basisarm angelenkte Zugfeder, welche auf den Kontaktarm eine vertikal zur Stromschiene gerichteten Zugkraft ausübt, an die Stromschiene gepresst.

Die gängigen Kurzschliesser weisen unter anderem den Nachteil auf, dass diese eine zu geringe Kurzschlussfestigkeit aufweisen. Die Kurzschlussfestigkeit der herkömmlichen Kurzschliesser liegt in der Regel bei rund 30 kA bei einer Abschaltzeit von 23 ms. Die Dimensionierung der elektrischen Anlagen von Bahnen geht heute jedoch häufig von Kurzschlüssen mit Stromstärken von 50 bis 60 kA aus.

Kurzschliesser, welche bei einem Kurzschlussereignis einem höheren Stromfluss ausgesetzt sind, werden in der Regel zerstört oder zumindest ernsthaft beschädigt. Dies liegt beispielsweise daran, dass der Leitungsquerschnitt zu klein dimensioniert ist und die stromleitenden Elemente bei einem zu hohen Stromfluss thermisch zerstört werden. Ferner werden Kurzschliesser nach herkömmlicher Bauart bei einem Kurzschlussereignis in der Regel weggeschleudert, was aufgrund der Verletzungsgefahr unerwünscht ist.

Es ist daher Aufgabe vorliegender Erfindung, eine Kurzschlussvorrichtung vorzuschlagen, welche einerseits höhere Stromstärken sicher ableiten kann und bei einem Kurzschlussereignis möglichst nicht zerstört und wegkatapultiert wird. Ferner soll die Kurzschlussvorrichtung möglichst einfach handhabbar, mobil installierbar und zudem kostengünstig herstellbar sein.

Die Aufgabe wird dadurch gelöst, dass die Gelenkverbindung eine Mehrfachgelenkverbindung ist, enthaltend zwei über ein Kniegelenk miteinander und über jeweils ein erstes und zweites Verbindungsgelenk mit dem Kontaktelement und dem Kontaktarm verbundene Hebel, wobei einer der Hebel als Schliesshebel ausgebildet ist, und die Ausbildung und Anordnung der Hebel und Gelenkverbindungen dergestalt ist, dass durch Ausüben einer Drehbewegung des Schliesshebels und mit ihm des Kniegelenks um die Achse des dem Schliesshebels zugeordneten Verbindungsgelenks das Kontaktelement und der Kontaktarm unter Ausbildung eines elektrischen Kontaktes zusammengeführt werden können.

Die genannte Drehbewegung des Schliesshebels bewirkt in der Regel, dass die Distanz zwischen dem ersten und zweiten Verbindungsgelenk durch das Zusammenführen des Kontaktelements und Kontaktarms verkleinert wird.

In einer bevorzugten Ausführung der Erfindung enthält die Mehrfachgelenkverbindung einen, mittels eines ersten Verbindungsgelenks an das Kontaktelement gekoppelten Schliesshebel und einen, mittels eines zweiten Verbindungsgelenks an den Kontaktarm gekoppelten Verbindungshebel, wobei die beiden Hebel über das Kniegelenk miteinander gekoppelt sind.

Die Mehrfachgelenkverbindung kann jedoch auch so konstruiert sein, dass diese einen, mittels eines Verbindungsgelenks an den Kontaktarm gekoppelten Schliesshebel und einen, mittels eines weiteren Verbindungsgelenks an das Kontaktelement gekoppelten Verbindungshebel enthält, und die beiden Hebel über das Kniegelenk miteinander gekoppelt sind.

Die Kurzschlussvorrichtung ist vorzugsweise über eine erste und zweite Klemmbacke an die Fahrschiene festlegbar, wobei die Mehrfachgelenkverbindung derart ausgelegt ist, dass bei der Herstellung der elektrischen Kontaktstellung zwischen dem Kontaktelement und dem Kontaktarm die Kurzschlussvorrichtung unter Verkleinerung der Distanz zwischen der ersten und zweiten Klemmbacke an der Fahrschiene festklemmbar ist. Die Klemmbacken wirken dabei in der Art einer Greifzange und werden zangenartig an die Fahrschiene festgelegt.

Die erste Klemmbacke ist bevorzugt Teil des Kontaktelements und die der ersten Klemmbacke gegenüberliegende zweite Klemmbacke ist bevorzugt Teil des Kontaktarms. Die zweite Klemmbacke ist in vorteilhafter Ausführung der Erfindung ein am, der Fahrschiene zugewandten Endabschnitt des Kontaktarms in einem Winkel, insbesondere in einem im wesentlichen rechten Winkel, zu diesem angebrachtes Bauteil.

Die Kontaktflächen der beiden Klemmbacken sind bevorzugt der Aussenkontur der Fahrschiene angepasst, so dass die Klemmbacken im installierten Zustand der Kurzschlussvorrichtung möglichst passgenau an der Fahrschiene festsitzen und einen optimalen Zangeneffekt ausüben. Ferner erhöht das möglichst passgenau festlegen der Klemmbacken an die Stromschiene die Auflagefläche bzw. Kontaktfläche und somit den Leitungsquerschnitt.

Der elektrische Kontakt zwischen Fahrschiene und Kurzschlussvorrichtung wird bevorzugt ausschliesslich über das Kontaktelement, d.h. über die erste Klemmbakke des Kontaktelementes, hergestellt. Das Kontaktelement, bzw. die Klemmbacke ist daher elektrisch leitend ausgebildet, so dass die elektrisch leitende Verbindung von der Fahrschiene zum Kontaktarm bzw. zur Stromschiene vorzugsweise ausschliesslich über das Kontaktelement hergestellt wird. Die zweite, in Kontaktstellung der Fahrschiene anliegende Klemmbacke des Kontaktarms bildet gegenüber der Fahrschiene vorzugsweise keinen elektrisch leitenden Kontakt aus. Die zweite Klemmbacke ist vorzugsweise teilweise oder vollständig elektrisch isoliert.

Die Mehrfachgelenkverbindung funktoniert bevorzugt nach dem bekannten Prinzip des Spannverschlusses, wie er beispielsweise für Schnallen- bzw. Bügelverschlüsse Anwendung findet.

Die Mehrfachgelenkverbindung ist vorzugsweise dergestalt ausgebildet, dass der elektrische Kontakt zwischen dem Kontaktelement und dem Kontaktarm durch Drehen des Schliesshebels in eine selbsthemmende Position hergestellt wird. Die selbsthemmende Position verhindert dabei das selbsttätige Öffnen des hergestellten elektrischen Kontaktes.

Die Selbsthemmung wird erreicht, indem der Schliess- und der Verbindungshebel solcherart miteinander über das Kniegelenk gekoppelt sind, dass zur Herstellung des elektrischen Kontaktes der Schliesshebel durch Ausüben einer Drehbewegung um die Achse des ersten Verbindungsgelenks bis zur Erreichung eines durch eine Minimaldistanz zwischen dem ersten und zweiten Verbindungsgelenk charakterisierten Totpunktes führbar ist und zur Herstellung der Selbsthemmung der Schliesshebel in Weiterführung der Drehbewegung in Überschreitung des Totpunktes in eine Verschlussposition geführt wird. Das Kniegelenk vollzieht hierzu mit dem Schliesshebel eine Drehbewegung um das dazugehörige erste Verbindungsgelenk. Das Einschnappen bzw. Umschnappen in die selbsthemmende Verschlussposition kann mit einer geringfügigen Vergrösserung der Distanz zwischen erstem und zweitem Verbindungsgelenk einhergehen, wobei in der Regel die Elastizität der zusammenwirkenden Elemente ebenfalls eine Rolle spielt.

In der Selbsthemmung befindet sich das Mehrfachgelenk als Verschlussvorrichtung in einer gespannten Stellung, welche nur durch Ausübung einer Drehbewegung des Schliesshebels in entgegengesetzter Richtung unter Anwendung des Kniehebelprinzips wieder gelöst werden kann.

Der Schliesshebel kann in Verschlussposition an einem Anschlag am Kontaktelement anliegen, an welchem sich der Schliesshebel in der selbsthemmenden Position anlegt. Ferner ist auch denkbar, dass Mittel zur Arretierung des Schliesshebels in der selbsthemmenden Position vorgesehen sind. Überdies kann die Mehrfachgelenkverbindung zusätzlich eine Spannfeder aufweisen.

Der Kontaktarm enthält in bevorzugter Ausführung ein elektrisch isoliertes Kontaktarmgehäuse, in welchem ein elektrisch leitendes Element, das sogenannte Stromleitelement, angeordnet ist. Das Stromleitelement ist ferner an eine freiliegende Kontaktfläche zur Herstellung eines elektrischen Kontaktes mit der Stromschiene gekoppelt. Das Kontaktelement enthält in dieser Ausführung vorzugsweise einen Gleitarm, welcher wenigstens teilweise im isolierten Kontaktarmgehäuse gleitend geführt bzw. gelagert ist. Zur Herstellung des elektrischen Kontaktes wird das Kontaktelement mit seinem Gleitarm beim Betätigen des Schliesshebels im Kontaktarmgehäuse in Richtung Stromleitelement geschoben bis der Gleitarm unter Herstellung des elektrischen Kontaktes am Stromleitelement ansteht.

Das Stromleitelement des Kontaktarms ist vorzugsweise ein Metallprofil, insbesondere ein Hohlprofil. Das Stromleitelement des Kontaktarms kann beispielsweise ein Strangpressprofil aus Metall sein. In bevorzugter Ausführung ist das Metallprofil als Rechtecksprofil ausgebildet. Das Stromleitelement kann z.B. aus Eisen, Stahl, Kupfer und insbesondere aus Aluminium oder einer Aluminiumlegierung sein.

Der Querschnitt der Metallprofile kann für die zu erwartenden Stromstärken entsprechend dimensioniert werden, so dass es möglich ist, mit einer erfindungsgemässen Kurzschlussvorrichtung einen Kurzschluss für sämtliche zu erwartenden Stromstärken sowohl elektrisch als auch mechanisch sicher zu beherrschen. D.h. die erfindungsgemässe Kurzschlssvorrichtung übersteht bei einem Kurzschlussereignis bei entsprechender Dimensionierung des Stromleitelemtentes Stromstärken von über 200 kA schadlos.

In bevorzugter Ausführung ist das Kontaktelement im wesentlichen aus einer ersten Klemmbacke und einem mit diesem verbundenen Gleitarm ausgebildet. Klemmbacke wie auch Gleitarm sind bevorzugt elektrisch leitend, wobei die Bauteile an den nicht Kontaktflächen ausbildenden Oberflächen teilweise oder vollständig mit einer elektrischen Isolation abgedeckt sein können.

In bevorzugter Ausführung ist die Mehrgelenkverbindung als Bügelkonstruktion ausgebildet. Diese zeichnet sich dadurch aus, dass beidseitig der Kurzschlussvorrichtung Schliesshebel angeordnet sind, welche über ein Verbindungselement zu einem Bügel verbunden sind, der eine Art Handgriff ausbildet.

Die zweiten Gelenkverbindungen des Kontaktarms sind bevorzugt am Kontaktarmgehäuse angebracht. Die ersten Gelenkverbindungen des Kontaktelementes können in Form von das Kontaktelement durchstossende Achsverbindungen ausgebildet sein.

Die Kurzschlussvorrichtung kann ferner im Bereich ihrer Kontaktfläche zum Pluspol und/oder im Bereich ihrer Kontaktfläche zum Minuspol der Anlage einen Magnet aufweisen, welcher eine Haftung von der Kontaktfläche zum entsprechenden Plusoder Minuspol herstellt.

Die Kurzschlussvorrichtung kann überdies, mit Ausnahme der Kontaktflächen, gesamthaft mit einem elektrisch isolierenden Material, vorzugsweise einem Kunststoff, ummantelt sein.

Zur Installation der Kurzschlussvorrichtung wird dieser mit seinen beiden Klemmbacken an die Fahrschiene angesetzt, wobei der Kontaktarm wegen seines Eigengewichts zum Boden geneigt ist und daher noch keinen Kontakt zur Stromschiene hat. In einem weiteren Schritt wird der Schliesshebel in einer Drehbewegung nach unten in Richtung Fahrschiene geführt, wobei das Kontaktelement mit seinem Gleitarm im Kontaktarmgehäuse an das Stromleitelement geschoben wird und mit diesem einen elektrischen Kontakt ausbildet. Gleichzeitig wird die erste Klemmbakke des Kontaktelements zur zweiten Klemmbacke des Kontaktarms geschoben, wobei die Fahrschiene zwischen den Klemmbacken derart eingeklemmt wird, dass der Kontaktarm angehoben wird und mit seiner Kontaktfläche unter Ausbildung eines elektrischen Kontaktes an die Stromschiene zu liegen kommt.

Ist der Schliesshebel einmal in die selbsthemmende Position geführt, so bleibt die Kontaktstellung der Kurzschlussvorrichtung ohne weiteres Dazutun erhalten. Die Kurzschlussvorrichtung gemäss oben beschriebener, spezifischer Ausführung findet Einsatz in Stromführungssystemen, in welchen die Stromschiene von unten bestrichen wird.

Die erfindungsgemässe Kurzschlussvorrichtung weist aufgrund seiner andersartigen Konstruktion verschiedene Sicherungen auf, welche verhindern, dass der Bediener durch Fehlmanipulationen bei dessen Installation versehentlich mit stromführenden Elementen in Berührung gelangt. Einerseits kann der Strom zwischen Fahr- und Stromschiene nur über die erste Klemmbacke des Kontaktelements fliessen. Die erste Klemmbacke kann jedoch erst elektrischen Strom führen, wenn der Kontakt sowohl zwischen Kontaktelement und Kontaktarm als auch zwischen Kontaktarm und Stromschiene hergestellt ist. Dies ist erst nach Betätigung des Schliesshebels der Fall, d.h. wenn die Kurzschlussvorrichtung komplett installiert ist, sich der Schliesshebel in einer selbsthemmenden Position befindet und keine weiteren Manipulationen an der Kurzschlussvorrichtung mehr vorgenommen werden müssen.

Da während der Installationen weder zwischen Kontaktelement und Kontaktarm noch zwischen Kontaktarm und Stromschiene ein elektrischer Kontakt hergestellt ist, führen weder Fahrschiene noch Elemente der Kurzschlussvorrichtung während der Installation elektrischen Strom.

Die Konstruktion der Kurzschlussvorrichtung kann auch für Stromführungssysteme ausgelegt sein, bei welchen die Stromschiene vom Stromabnehmer seitlich oder von oben bestrichen wird.

Die erfindungsgemässe Kurzschlussvorrichtung eignet sich auch als tragbares Gerät für den Alltagseinsatz. So kann beispielsweise die Kurzschlussvorrichtung vom Bahnpersonal mitgeführt werden, um im Notfall bewusst einen Kurzschluss auszulösen. Dies kann der Fall sein, wenn sich unbefugte Personen im Bereich der Bahn-elektrischen Anlagen aufhalten.

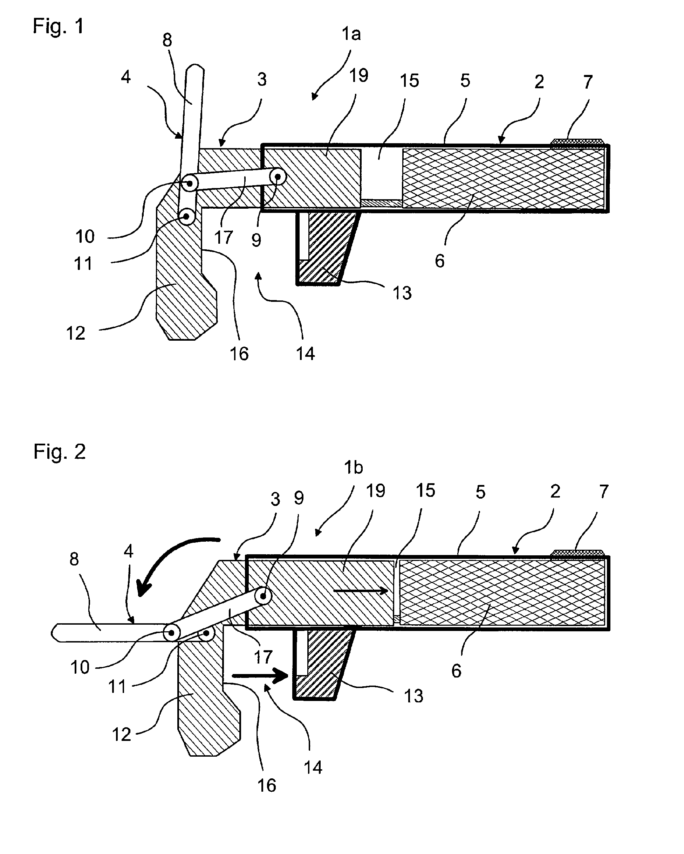

Im folgenden wird die Erfindung beispielhaft und mit Bezug auf die beiliegenden Zeichnungen näher erläutert. Die Figuren 1 bis 3 zeigen jeweils eine schematische Darstellung des Funktionsprinzips einer erfindungsgemässen Kurzschlussvorrichtung in verschiedenen Montagestufen.

Fig. 1 zeigt eine schematische Darstellung einer erfindungsgemässen Kurzsschlussvorrichtung 1 a. Die Kurzschlussvorrichtung 1 a enthält einen Kontaktarm 2 und ein Kontaktelement 3, welche über eine Mehrfachgelenkverbindung 4 gekoppelt sind. Der Kontaktarm umfasst ein Kontaktarmgehäuse 5, welches elektrisch isoliert ist, sowie ein in das Kontaktarmgehäuse 5 eingelassenes Stromleitelement 6, welches an eine Kontaktfläche 7 zur Stromschiene (nicht gezeigt) elektrisch leitend gekoppelt ist. Das Kontaktelement 3 ist als elektrisch leitendes Bauteil mit einer Kontaktfläche 16 zur Fahrschiene ausgebildet. Das Kontaktelement 3 weist eine erste Klemmbacke 12 sowie einen mit der ersten Klemmbacke 12 verbundenen Gleitarm 19 auf. Der ersten Klemmbacke 12 gegenüberliegend angeordnet befindet sich eine zweite Klemmbacke 13, welche Bestandteil des Kontaktarms 3 ist. Die zweite Klemmbacke 13 ist elektrisch isoliert und weist entsprechend keine elektrisch leitenden Kontaktflächen auf. Die beiden Klemmbacken 12, 13 sind zangenartig angeordnet und bilden einen Zwischenraum 14 aus, in welchen die Fahrschiene (nicht gezeigt) bei der Installation der Kurzschlussvorrichtung zu liegen kommt.

Die beiden Klemmbacken 12, 13 weisen ein dem Aussenprofil der Fahrschiene angepasstes Greifprofil auf.

Die Mehrfachgelenkverbindung 4 enthält einen Schliesshebel 8, welcher über ein erstes Verbindungsgelenk 11 an das Kontaktelement 3 gekoppelt ist. Ferner enthält die Mehrfachgelenkverbindung 4 einen Verbindungshebel 17, welcher über ein zweites Verbindungsgelenk 9 an den Kontaktarm 2 gekoppelt ist. Im vorliegenden Beispiel ist der Verbindungshebel 17 an das Kontaktarmgehäuse 5 des Kontaktarmes 2 gekoppelt. Der Schliesshebel 8 und der Verbindungshebel 17 sind ferner über ein Kniegelenk 10 miteinander gekoppelt. Das Kniegelenk ist dabei so angeordnet, dass durch Ausüben einer Drehbewegung des Schliesshebels 8 und mit ihm des Kniegelenks 10 um die Achse des ersten Verbindungsgelenks 11 die Distanz zwischen dem ersten und zweiten Verbindungsgelenk 11, 9 unter Herstellung eines Kontaktes zwischen Kontaktelement 3 und Stromleitelement 6 des Kontaktarms 2 verkleinert wird.

Bei diesem Vorgang wird gleichzeitig der Zwischenraum 14 verkleinert und dadurch die Kurzschlussvorrichtung 1 an die darin geführte Fahrschiene zangenartig festgeklemmt. Durch diesen Vorgang wird nicht nur der elektrische Kontakt zwischen Kontaktelement 3 und Stromleitelement 6 des Kontaktarmes 2 hergestellt, sondern auch der elektrische Kontakt zwischen der Kontaktfläche 16 des Kontaktelements 3 und der Fahrschiene. Diese zweifache Kontaktherstellung gewährleistet eine doppelte Sicherung.

Durch das Festklemmen der Kurzschlussvorrichtung an die Fahrschiene wird ferner der ungestützt geneigte Kontaktarm 2 mit seinem der Stromschiene zugewandten vorderen Ende vertikal angehoben und mit der Kontaktfläche 7 an die Unterseite der Stromschiene gepresst, wodurch der Kontakt zur Stromschiene hergestellt wird.

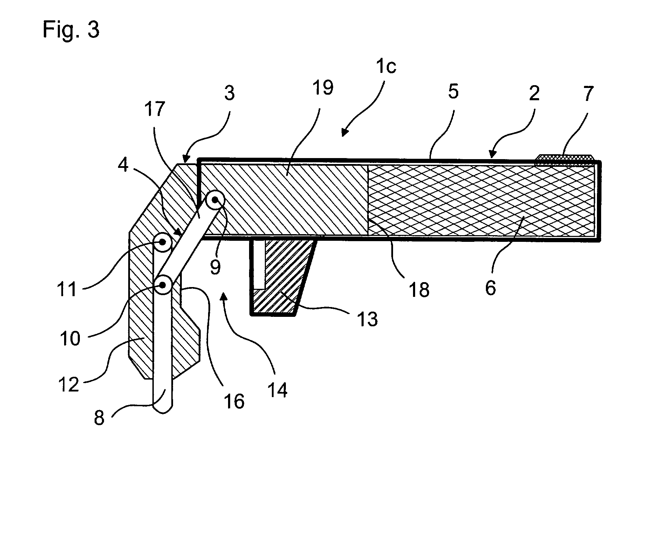

Fig. 1 und 3 zeigen das Funktionsprinzip der Kurzschlussvorrichtung zur Herstellung einer elektrischen leitenden Verbindung zwischen Stromschiene und Fahrschiene in verschiedenen Montage-Stufen der Kurzschlussvorrichtung 1a, 1b, 1c.

Die Kurzschlusservorrichtung 1 a wird mit dem von den Klemmbacken 12, 13 ausgebildeten Zwischenraum 14 auf die Fahrschiene aufgesetzt. Nachfolgend wird der Schliesshebel 8 um die Achse des Verbindungsgelenkes 11 vom Kontaktarm 2 weg gedreht (Fig. 2). Der Schliesshebel 8 wird über den Totpunkt hinaus an einen Anschlag in eine selbsthemmende Position geführt. In dieser Position liegt der Schliesshebel 8 zweckmässig dem Kontaktelement 3 an.

Bei diesem Vorgang werden drei Aktionen ausgelöst. Erstens wird der Gleitarm 19 des Kontaktelements 3 in das Kontaktarmgehäuse 5 des Kontaktarms geschoben und dadurch der Kontakt 18 zwischen Kontaktelement 3 und Stromleitelement 6 des Kontaktarms 2 unter Verringerung des Abstandes 15 hergestellt. Zweitens wird die Fahrschiene durch das Zusammenführen der beiden Klemmbacken 12, 13 im Zwischenraum 14 zangenartig festgeklemmt und drittens wird der Kontaktarm 2 durch das Festklemmen der Fahrschiene zwischen den Klemmbacken 12, 13 vertikal angehoben, so dass die Kontaktfläche 7 unter Ausbildung eines elektrischen Kontaktes an die Stromschiene zu liegen kommt.

## Patentansprüche

1. Kurzschlussvorrichtung (1) für das Schienennetz einer elektrischen Bahn, welches eine Stromschiene zur Speisung des elektrischen Antriebs der Bahn enthält, zur Herstellung einer Kurzschlussverbindung zwischen einer Fahrschiene und der Stromschiene, wobei die Kurzschlussvorrichtung (1) ein, eine Kontaktfläche (16) zur Fahrschiene ausbildendes erstes Kontaktelement (3) und einen mit dem Kontaktelement (3) über eine Gelenkverbindung (4) gekoppelten, eine Kontaktfläche (7) zur Stromschiene ausbildenden Kontaktarm (2) enthält,
**dadurch gekennzeichnet, dass**
die Gelenkverbindung eine Mehrfachgelenkverbindung (4) ist, enthaltend zwei über ein Kniegelenk (10) miteinander und über jeweils ein erstes und zweites Verbindungsgelenk (9, 11) mit dem Kontaktelement (3) und dem Kontaktarm (2) verbundene Hebel (8, 17), wobei einer der Hebel als Schliesshebel (8) ausgebildet ist, und die Ausbildung und Anordnung der Hebel (8, 17) und Gelenkverbindungen (9, 10, 11) dergestalt ist, dass durch Ausüben einer Drehbewegung des Schliesshebels (8) und mit ihm des Kniegelenks (10) um die Achse des dem Schliesshebels (8) zugeordneten Verbindungsgelenks (11) das Kontaktelement (3) und der Kontaktarm (2) unter Ausbildung eines elektrischen Kontaktes zusammenführbar sind.

2. Kurzschlussvorrichtung nach Anspruch 1, wobei die Mehrfachgelenkverbindung (4) einen, mittels eines ersten Verbindungsgelenks (11) an das Kontaktelement (3) gekoppelten Schliesshebel (8) und einen, mittels eines zweiten Verbindungsgelenks (9) an den Kontaktarm (2) gekoppelten Verbindungshebel (17) enthält, und die beiden Hebel (8, 17) über das Kniegelenk (10) miteinander gekoppelt sind.

3. Kurzschlussvorrichtung nach Anspruch 1, wobei die Mehrfachgelenkverbindung einen, mittels eines Verbindungsgelenks an den Kontaktarm (2) gekoppelten Schliesshebel und einen, mittels eines weiteren Verbindungsgelenks an das Kontaktelement (3) gekoppelten Verbindungshebel enthält, und die beiden Hebel über das Kniegelenk miteinander gekoppelt sind.

4. Kurzschlussvorrichtung nach einem der Ansprüche 1 bis 3, wobei das Kontaktelement (3) eine erste Klemmbacke (12) und der Kontaktarm (2) eine zweite Klemmbacke (13) ausbilden, und die Kurzschlussvorrichtung (1) über die erste und zweite Klemmbacke (12, 13) an die Fahrschiene festlegbar ist, wobei die Mehrfachgelenkverbindung (4) derart ausgelegt ist, dass bei der Herstellung der elektrischen Kontaktstellung (18) zwischen dem Kontaktelement (3) und dem Kontaktarm (2) die Kurzschlussvorrichtung (1) unter Verkleinerung der Distanz (14) zwischen der ersten und zweiten Klemmbacke (12, 13) an der Fahrschiene festklemmbar ist.

5. Kurzschlussvorrichtung nach einem der Ansprüch 1 bis 4, wobei die Mehrfachgelenkverbindung (4) nach dem Prinzip des Bügelverschlusses funktioniert und zur Herstellung des elektrischen Kontaktes (18) zwischen dem Kontaktelement (3) und dem Kontaktarm (2) das Kniegelenk (10) mit seiner Achse durch die Drehbewegung des Schliesshebels (8) um das erste Verbindungsgelenk (11) in eine selbsthemmende Verschlussposition führbar ist, welche das selbsttätige Öffnen des hergestellten elektrischen Kontaktes (18) verhindert.

6. Kurzschlussvorrichtung nach einem der Ansprüche 1 bis 5, wobei der Schliess-(8) und der Verbindungshebel (17) solcherart miteinander über das Kniegelenk (10) gekoppelt sind, dass zur Herstellung des Kontaktes der Schliesshebel (8) durch Ausüben einer Drehbewegung um die Achse des diesem zugeordneten, ersten Verbindungsgelenks (11) bis zur Erreichung eines Totpunktes führbar ist, und in Weiterführung der Drehbewegung der Schliesshebel (8) in Überschreitung des Totpunktes in eine selbsthemmende Verschlussposition führbar ist.

7. Kurzschlussvorrichtung nach Anspruch 6, wobei sich die Verschlussposition durch einen Anschlag am Kontaktelement (3) auszeichnet, an welchen der Schliesshebel (8) nach Überschreiten des Totpunktes anlegbar ist.

8. Kurzschlussvorrichtung nach einem der Ansprüche 1 bis 7, wobei das Kontaktelement (3) selbst elektrisch leitend ist und in Kontaktstellung mit dem Kontaktarm (2) eine leitende Verbindung von der Fahrschiene über die erste Klemmbacke (12) zum Kontaktarm (2) herstellbar ist, und die zweite Klemmbacke (13) des Kontaktarmes (2) isoliert ist und keine elektrische Verbindung zwischen der Fahrschiene und dem Kontaktarm (2) herstellbar ist.

9. Kurzschlussvorrichtung nach einem der Ansprüche 1 bis 8, wobei die zweite Klemmbacke (13) ein am Endabschnitt des Kontaktarms (2) in einem Winkel, insbesondere in einem im wesentlichen rechten Winkel, zu diesem angebrachtes und der ersten Klemmbacke (12) gegenüberliegendes Bauteil ist.

10. Kurzschlussvorrichtung nach einem der Ansprüche 1 bis 9, wobei der Kontaktarm (2) ein elektrisch leitendes Stromleitelement (6) enthält, welches aus einem Metallprofil, insbesondere aus einem Metallhohlprofil, ist.

11. Kurzschlussvorrichtung nach Anspruch 10, wobei das Stromleitelement (6) ein Strangpressprofil aus Aluminium ist.

12. Kurzschlussvorrichtung nach einem der Ansprüche 1 bis 11, wobei der Kontaktarm (2) ein elektrisch isoliertes Kontaktarmgehäuse (5) enthält, in welchem das Stromleitelement (6) angeordnet ist, und das Kontaktelement (3) einen Gleitarm (19) enthält, welcher zur Herstellung des elektrischen Kontaktes mit dem Stromleitelement (6) wenigstens teilweise in das Kontaktarmgehäuse (5) eingreift und in diesem gleitend gelagert ist.

13. Kurzschlussvorrichtung nach einem der Ansprüche 1 bis 12, wobei die Mehrgelenkverbindung (4) als Bügelkonstruktion ausgebildet ist, und beidseitig der Kurzschlussvorrichtung (1) Schliesshebel (8) angeordnet sind, welche über ein Verbindungselement zu einem Bügel verbunden sind, welcher eine Art Handgriff ausbildet.
